# FASCICULE DE BREVET EUROPEEN

(11) **EP 3 141 440 B1**
(45) Date de publication et mention de la délivrance du brevet: **08.05.2019**
(21) Numéro de dépôt: 16182281.2
(22) Date de dépôt: 02.08.2016
(51) Int. Cl.: B60S 1/08

(54) **SYSTÈME ET PROCÉDÉ D'ESSUYAGE D'UNE VITRE DE VÉHICULE**
SYSTEM UND VERFAHREN ZUR SCHEIBENREINIGUNG VON FAHRZEUGEN
SYSTEM AND METHOD FOR WIPING A VEHICLE WINDOW

(30) Priorité: 14.09.2015 FR 1558549
(43) Date de publication de la demande: 15.03.2017
(73) Titulaire: Valeo Systèmes d'Essuyage, 78322 Le Mesnil Saint Denis (FR)
(72) Inventeur: GIRAUD, Frédéric, 78610 LE PERRAY EN YVELINES (FR)
(74) Mandataire: Callu-Danseux, Violaine

(56) Documents cités:
- WO-A1-03/051692
- DE-A1-102012 224 473
- FR-A1- 2 991 948
- FR-A1- 3 006 271
- US-A1- 2009 125 183

## Description

La présente invention concerne un système et un procédé d'essuyage d'une vitre de véhicule, en particulier automobile.

Une automobile est classiquement équipée d'essuie-glaces pour assurer un lavage du pare-brise et éviter que la vision qu'a le conducteur de son environnement ne soit perturbée.

Un pare-brise est en général équipé de deux essuie-glaces, un destiné à essuyer une première zone de la vitre, et un second destiné à essuyer une deuxième zone de la vitre différente de la première zone précitée.

Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade*" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Il est connu d'équiper le pare-brise d'un véhicule avec un capteur, par exemple de pluie. Ce capteur est situé à l'intérieur de l'habitacle du véhicule et peut être appliqué contre une surface intérieure de la vitre. Le capteur est destiné à détecter des informations à travers le pare-brise, telles que la présence d'eau.

Le document FR-A1-2 991 948 décrit un système d'essuyage et de lavage d'une vitre d'un véhicule, cette vitre étant équipée d'un élément ou capteur d'analyse de l'état du pare-brise. Ce document montre aussi le préambule de la première revendication.

Document FR 3 006 271 A1 montre un système d'essuyage avec deux moteurs de l'état de la technique. L'efficacité du capteur est notamment liée à la propreté du pare-brise, et en particulier de la portion du pare-brise qui recouvre le capteur. Les essuie-glaces sont en général utilisés pour nettoyer cette portion, qui fait donc partie de l'une des zones balayées par les balais. Dans le cas où la portion serait sale et devrait être nettoyée, les essuie-glaces sont actionnés et parcourent l'intégralité des zones précitées, même si ces zones sont moins sales que la portion et ne nécessitent pas forcément d'être nettoyées.

Cette situation présente un inconvénient. Au moins un des essuie-glaces ainsi actionnés n'est pas utile pour le nettoyage de la portion et peut gêner le conducteur, et en particulier traverser le champ de vision du conducteur dans le cas du balai côté conducteur, et ainsi le perturber. Ceci est d'autant plus vrai lorsque le nettoyage de la portion par les essuie-glaces est réalisé de manière automatique, sans commande spécifique du conducteur.

L'invention propose une solution simple, efficace et économique à ce problème.

L'invention propose à cet effet un système d'essuyage d'une vitre de véhicule, ladite vitre étant équipée d'un capteur, le système comprenant :
- un premier balai d'essuyage apte à essuyer une première zone de la vitre dont une portion s'étendant au niveau dudit capteur, ce premier balai d'essuyage étant configuré pour être situé du côté d'un passager du véhicule,
- un deuxième balai d'essuyage apte à essuyer une deuxième zone de la vitre différente de ladite première zone,
- des moyens d'actionnement desdits premier et deuxième balais d'essuyage en vue de leur déplacement sur la vitre, et
- des moyens électroniques de commande desdits moyens d'actionnement,
caractérisé en ce que lesdits moyens d'actionnement comprennent un premier moteur d'actionnement dudit premier balai et un second moteur d'actionnement dudit second balai, et en ce que lesdits moyens de commande sont configurés pour activer seulement ledit premier moteur pour nettoyer la portion (8, 8') de la première zone de la vitre recouvrant le capteur.

Le capteur est par exemple un capteur de pluie, un capteur d'ensoleillement, un capteur de brouillard, un capteur de salissures, un capteur de panneaux signalétiques, un appareil photographique, une caméra vidéo, un capteur optique à base de laser, etc.

L'invention propose ainsi de faire fonctionner un seul des balais d'essuyage lorsque la portion recouvrant le capteur doit être nettoyée, et pas le reste de la vitre. L'autre balai reste immobile et n'est donc pas susceptible de gêner le conducteur du véhicule.

Le système selon l'invention peut comprendre une ou plusieurs des caractéristiques suivantes, prises isolément ou en combinaison les unes avec les autres :
- lesdits moyens de commande sont configurés pour activer lesdits premier et deuxième moteurs lorsqu'un nettoyage desdites première et deuxième zones est souhaité,
- ladite portion est située sensiblement au milieu de la vitre,
- ladite portion est située sur un côté de la vitre,
- le système comprend des moyens de projection de liquide de nettoyage, lesdits moyens de commande étant configurés pour activer une projection de liquide lorsqu'un nettoyage de ladite portion est souhaité,
- lesdits moyens de projection sont portés par ledit premier balai, et
- lesdits moyens de projection et/ou lesdits moyens de commande sont configurés pour projeter du liquide depuis un côté seulement dudit premier balai et/ou lors d'une phase de descente dudit premier balai sur la vitre.

La présente invention concerne également un procédé d'essuyage d'une vitre d'un véhicule, au moyen d'un système selon l'une des revendications précédentes, comprenant une étape consistant à :
b) activer seulement ledit premier moteur lorsqu'un nettoyage de ladite portion est souhaité, ledit deuxième moteur restant inactif.

Le procédé peut comprendre une étape préliminaire consistant à :
a) émettre un signal auxdits moyens de commande en vue de l'activation seule dudit premier moteur.

De préférence, l'émission dudit signal résulte d'une commande effectuée par un conducteur du véhicule, ou par une détection de salissure de ladite portion par ledit capteur.

Le procédé peut comprendre, pendant l'étape b), une sous-étape consistant à activer une projection de liquide sur la vitre.

La projection de liquide peut avoir lieu depuis un côté seulement dudit premier balai. La projection de liquide peut avoir lieu pendant une phase de descente dudit premier balai sur la vitre.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique d'une vitre de véhicule équipée d'un système d'essuyage et d'un capteur,
- la figure 2 est une autre vue schématique d'une vitre de véhicule équipée d'un système d'essuyage et d'un capteur,
- la figure 3 est une autre vue schématique d'une vitre de véhicule équipée d'un système d'essuyage et d'un capteur, le système d'essuyage étant en cours de fonctionnement,
- la figure 4 est une vue schématique en perspective d'un système d'essuyage de la technique antérieure à un unique moyen d'actionnement des balais d'essuyage,
- la figure 5 est une vue schématique en perspective d'un système d'essuyage selon l'invention à un moyen d'actionnement par balai d'essuyage,
- la figure 6 est une vue schématique en perspective d'un balai d'essuyage, et
- les figures 7 et 8 sont des vues correspondant à celle de la figure 3 et illustrant un système d'essuyage selon l'invention en cours de fonctionnement.

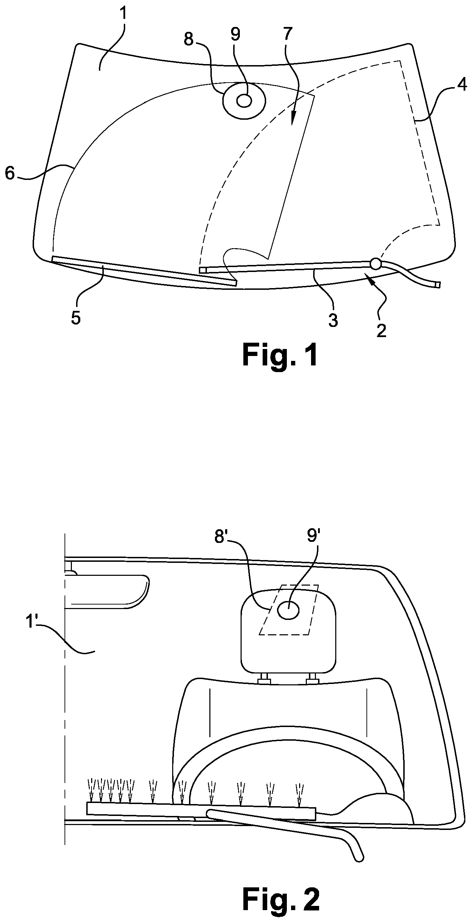

La figure 1 illustre une vitre 1 d'un véhicule, par exemple un véhicule automobile. Une telle vitre est ici un pare-brise 1 délimité par une face intérieure, tournée vers l'habitacle du véhicule, ainsi que par une face extérieure tournée vers l'extérieur du véhicule.

Un système d'essuyage 2 est installé sur ce pare-brise 1, de manière notamment à évacuer l'eau présente sur la face extérieure, et éventuellement à assurer une projection d'un liquide de lavage sur cette même face.

Sur la figure 1, le système 2 est illustré dans une position de repos, c'est-à-dire une position où la mise en fonctionnement du système 2 n'est pas requise. Ce système 2 comprend un premier balai d'essuyage 3 destiné à essuyer une première zone 4 du pare-brise 1, cette dernière étant illustrée par un trait pointillé qui délimite la première zone 4. Cette première zone 4 est ici du côté conducteur du véhicule, le premier balai d'essuyage 3 étant configuré pour être monté du côté conducteur du véhicule, en conduite à gauche.

Le premier balai d'essuyage 3 est relié à un premier point de rotation par l'intermédiaire d'un premier bras d'actionnement (non représenté), le premier balai d'essuyage et le premier bras effectuant un mouvement de va-et-vient en balayant la première zone 4. Le mouvement de rotation du premier bras est opéré par des moyens d'actionnement non représentés.

Le système 2 comprend encore un deuxième balai d'essuyage 5 destiné à essuyer une zone 6 du pare-brise 1 au moins en partie différente de la première zone 4 du pare-brise 1. Dans la suite de la description, cette zone balayée par le deuxième balai d'essuyage 5 sera appelée deuxième zone 6 du pare-brise 1, cette dernière étant illustrée par un trait plein qui entoure la deuxième zone 6. On notera que la première zone 4 et la deuxième zone 6 du pare-brise 1 se chevauchent au moins sur une partie centrale du pare-brise, délimitée à la fois par un trait plein et un trait pointillé et référencée 7 sur la figure 1.

L'invention s'intéresse plus particulièrement au nettoyage de la deuxième zone 6 du pare-brise qui ne se chevauche pas avec la première zone 4 de ce pare-brise 1. Plus particulièrement, l'invention envisage le nettoyage d'une portion supérieure de la deuxième zone 6, cette portion étant entourée par un cercle référencé 8 sur la figure 1. Cette portion 8 de la deuxième zone 6 du pare-brise 1 reçoit un capteur 9 qui analyse l'état du pare-brise 1 ou l'état de la route située en avant du véhicule. Il peut ainsi s'agir d'un capteur de pluie solidaire de la face intérieure du pare-brise 1 et installé au droit de la partie supérieure 8. Il peut également s'agir d'un capteur d'ensoleillement, d'un appareil photographique ou d'un capteur optique laser ou encore d'une caméra, notamment pour une vision de nuit. Il peut enfin s'agir d'un détecteur de brouillard, de salissures ou un détecteur de panneaux signalétiques.

La deuxième zone 6 est du côté passager du véhicule, le deuxième balai d'essuyage 5 étant configuré pour être monté du côté passager du véhicule, en conduite à gauche. Le deuxième balai d'essuyage 5 est relié à un second point de rotation par l'intermédiaire d'un second bras (non représenté), le deuxième balai d'essuyage 5 et le second bras effectuant un mouvement de va-et-vient en balayant la deuxième zone 6 du pare-brise 1. Le mouvement de rotation du second bras est opéré par les mêmes moyens d'actionnement précités dans la technique actuelle.

La figure 2 illustre une vitre 1' d'un autre véhicule automobile, sur laquelle est installé un système d'essuyage 2' dont seul le premier balai 3' est représenté. La vitre 1' est équipée d'un capteur 9' qui est recouverte par une portion 8'.

Les figures 1 et 2 représentent l'art antérieur à la présente invention et montrent deux positions différentes d'un capteur de vitre, à savoir au milieu de la vitre (figure 1) et du côté du conducteur du véhicule (figure 2).

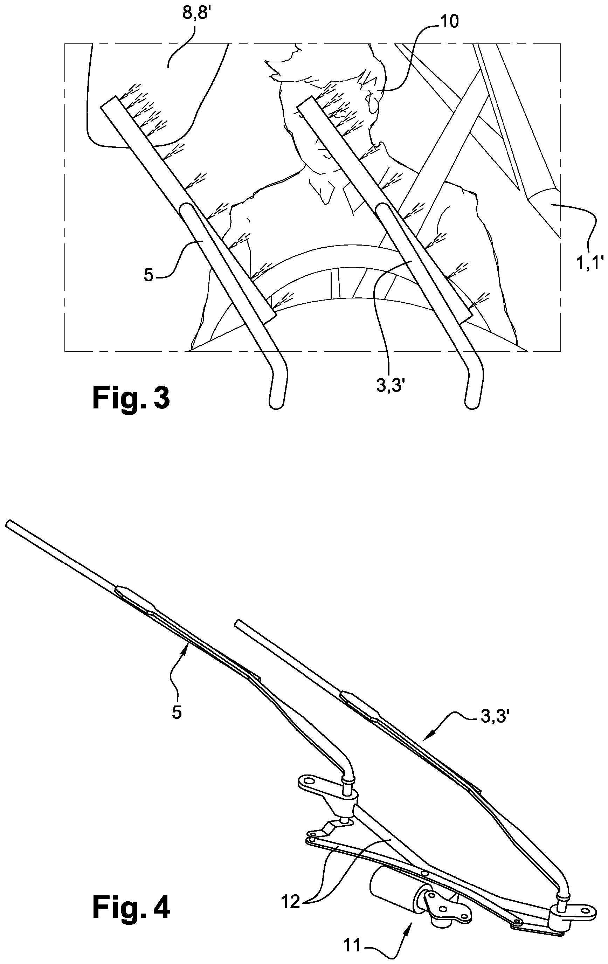

Dans ces deux cas de figure et, comme le montre la figure 3, le fonctionnement des systèmes d'essuyage pour nettoyer la portion 8, 8' est susceptible de gêner la vision du conducteur, même si cette portion n'est pas située sur le côté conducteur 10 du véhicule.

La figure 4 montre un système d'essuyage de la technique antérieure et en particulier les moyens d'actionnement communs de leurs balais d'essuyage 3, 3', 5. Ces moyens d'actionnement comprennent un unique moteur 11 dont l'arbre de sortie est relié par une tringlerie ou timonerie 12 aux bras d'entraînement des deux balais d'essuyage.

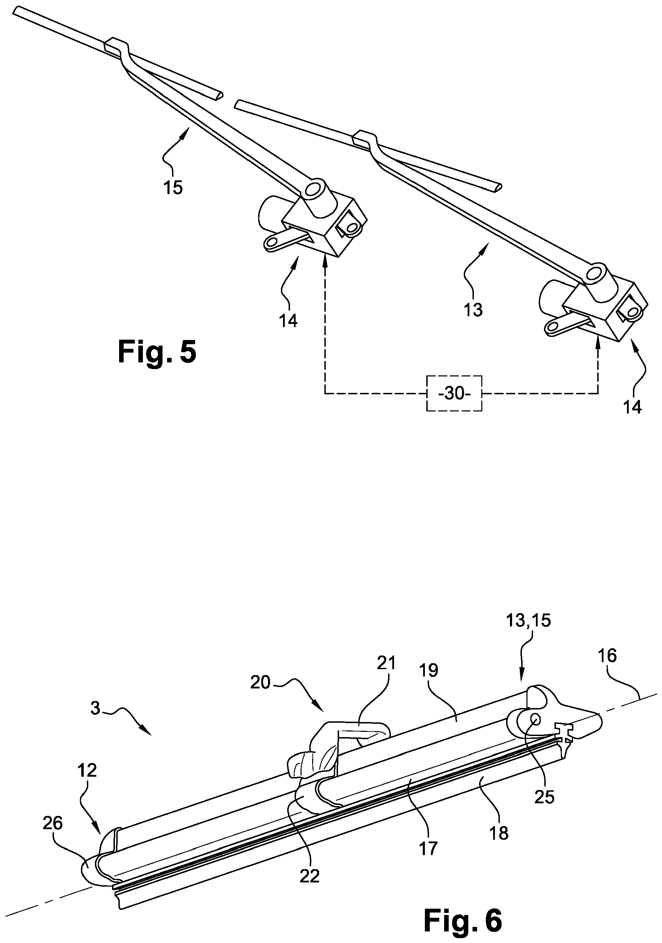

La figure 5 montre un système d'essuyage selon l'invention dans lequel les moyens d'actionnement des balais d'essuyage 13, 15 comprennent deux moteurs 14 indépendants. Un premier moteur 14 est configuré pour actionner le premier balai 13, côté conducteur dans l'exemple précité, et un second moteur est configuré pour actionner le second balai 15, côté passager.

Chaque balai 13, 15 peut être de type à raclette et palonniers. Il peut également s'agir d'un balai plat, appelé « *flat blade* », comme représenté à la figure 6 ou mixte (également appelé hybride).

Chaque balai d'essuyage 13, 15 comprend un support 17 à l'intérieur duquel est logée une vertèbre de rigidification. Le support 17 comprend encore une cavité longitudinale dans laquelle est enfilée une raclette, autrement appelée lame de balayage 18. Cette dernière est un composant souple du balai d'essuyage en appui contre la face extérieure du pare-brise.

Sur sa partie supérieure, le support 17 est recouvert par un déflecteur 19 agencé pour utiliser l'effet dynamique du déplacement du véhicule pour augmenter la force d'appui du balai d'essuyage 13, 15 sur le pare-brise.

Alternativement, le balai d'essuyage 13, 15 peut comprendre deux vertèbres de rigidification. Dans ce cas, les deux vertèbres sont rendues solidaires de la lame de balayage 18 constitutive du balai d'essuyage 13, 15, et ce dernier est dépourvu de support 17. La lame de balayage 18 peut être pourvue de deux fentes ouvertes le long du balai d'essuyage 13, 15 et disposées latéralement sur celle-ci, ces deux fentes recevant chacune une vertèbre de rigidification.

Sensiblement au centre du balai d'essuyage 13, 15, on trouve un moyen de solidarisation 20 du balai d'essuyage sur le bras qui génère son mouvement, notamment sa rotation. Ce moyen de solidarisation 20 comprend au moins un adaptateur 21 relié par une liaison pivot à un connecteur 22. Ce dernier assure une prise mécanique sur le support 17 du balai d'essuyage 13, 15, alors que l'adaptateur 21 a pour fonction d'assurer une liaison mécanique entre une extrémité du bras et le connecteur 22. Un tel adaptateur 21 est par conséquent une pièce dont la forme peut être modifiée en fonction de la forme de l'extrémité du bras, par exemple une extrémité rectiligne, en forme de crochet ou présentant un doigt de basculement et une ou plusieurs pattes de solidarisation.

Au niveau de chacune de ses extrémités, le balai d'essuyage est pourvu d'un embout 25, 26 pourvu d'au moins un logement lui permettant de s'enfiler au moins sur le support 17.

Le système 2 selon l'invention comprend aussi un dispositif d'approvisionnement en liquide de lavage du pare-brise 1. Ce dispositif d'approvisionnement comprend au moins un tube de transport du liquide de lavage installé entre au moins une pompe de mise en circulation du liquide et chaque balai d'essuyage 13, 15.

Le dispositif d'approvisionnement 10 peut inclure cette pompe de circulation et éventuellement un module de gestion de la circulation du liquide comprenant notamment au moins une vanne et/ou un clapet, ce module de gestion étant alors installé entre la pompe de circulation et les balais d'essuyage, et relié à ces composants par des tubes de transport du liquide de lavage.

Les balais d'essuyage 13, 15 sont pourvus de moyens de projection du liquide de lavage de manière à projeter le liquide de lavage au moins sur les zone 4, 6 du pare-brise 1.

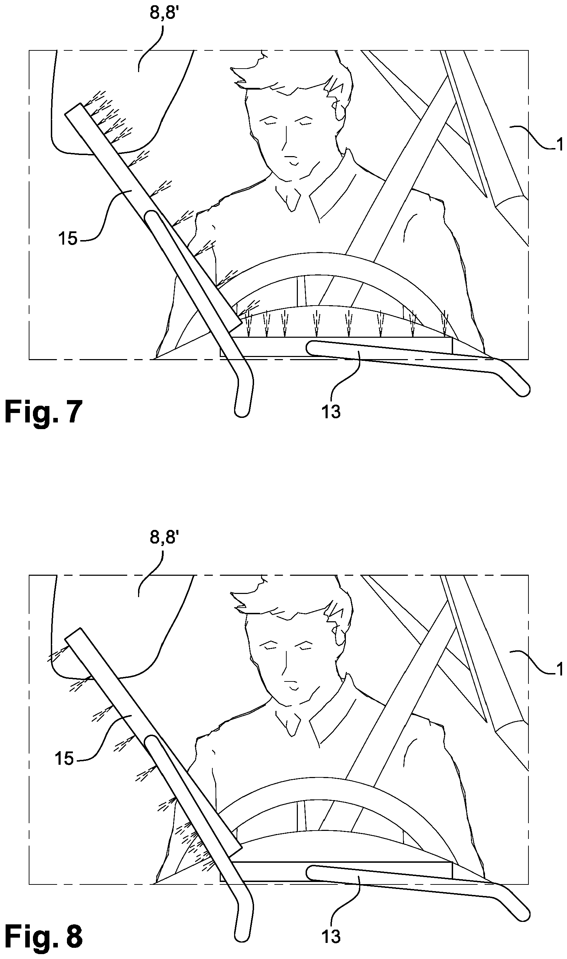

Comme on peut le comprendre des figures 7 et 8, les moyens de projection peuvent se présenter sous le forme de rampes s'étendant sur sensiblement toute la longueur des balais. Chaque balai 13, 15 comprend de préférence une rampe sur un premier côté pour la projection de liquide sur un premier côté du balai, par exemple vers le haut lorsque le balai se déplace dans une phase ascendante, et une rampe sur l'autre côté pour la projection de liquide sur ce côté du balai, par exemple vers le bas lorsque le balai se déplace dans une phase descendante.

Les moteurs 14 sont du type électronisé et sont chacun associés à des moyens électroniques 30 de commande tels qu'une carte de circuit imprimé capable de gérer le pilotage du moteur ainsi que l'activation ou la désactivation du dispositif d'approvisionnement en liquide de lavage, par exemple en alimentant électriquement la pompe de circulation du liquide de lavage.

De façon classique, les moyens 30 de commande des moteurs 14 sont configurés pour activer les moteurs lorsqu'un nettoyage des zones 4, 6 est souhaité. Selon l'invention, ils sont en outre configurés pour activer un seul des balais, et en particulier le balai dont la zone comprend la portion 8 ou 8' précitée recouvrant le capteur 9. Ceci en vue du nettoyage de cette portion. Dans ce dernier cas, l'autre balai reste immobile, son moteur étant inactif.

Les figures 7 et 8 montrent des exemples de réalisation dans lesquels le pare-brise 1 est similaire à celui de la figure 1 et est équipé d'un capteur sensiblement en son milieu et en position haute. Les moyens de commande sont alors configurés pour activer le moteur 14 d'entraînement du second balai 15 afin de déplacer seulement ce balai et nettoyer la zone 6 et donc la portion 8, 8'.

La figure 7 représente un mode de réalisation dans lequel du liquide de nettoyage est projeté depuis un même côté de chaque balai lors de l'actionnement du second balai 15. Bien que le premier balai 13 reste immobile, du liquide est projeté depuis l'une de ses rampes. La projection de liquide se fait ici lors du déplacement vers le haut du second balai et lors d'une phase ascendante de façon à ce que le liquide projeté soit étalé et retiré dès son dépôt sur le pare-brise.

La figure 8 représente une variante de réalisation dans lequel du liquide de nettoyage est projeté depuis un côté du premier balai en cours de déplacement. Le premier balai 13 reste immobile et n'est pas utilisé pour projeter du liquide sur le pare-brise. La projection de liquide se fait ici lors du déplacement vers le bas du second balai 15 et lors d'une phase descendante de façon à ce que le liquide projeté soit étalé et retiré dès son dépôt sur le pare-brise.

On comprend des figures 7 et 8 que le confort visuel du conducteur est respecté car le balai 13 inactif ne traverse pas le champ de vision du conducteur et ne le perturbe pas lors du nettoyage de la portion 8, 8'.

## Revendications

1. Système (2) d'essuyage d'une vitre (1) de véhicule, ladite vitre étant équipée d'un capteur (9), le système comprenant :
- un premier balai d'essuyage (15) apte à essuyer une première zone de la vitre dont une portion (8, 8') s'étendant au niveau dudit capteur, ce premier balai d'essuyage (15) étant configuré pour être situé du côté d'un passager du véhicule,
- un deuxième balai d'essuyage (13) apte à essuyer une deuxième zone de la vitre différente de ladite première zone,
- des moyens (14) d'actionnement desdits premier et deuxième balais d'essuyage en vue de leur déplacement sur la vitre, et
- des moyens électroniques (30) de commande desdits moyens d'actionnement,
**caractérisé en ce que** lesdits moyens d'actionnement comprennent un premier moteur (14) d'actionnement dudit premier balai et un second moteur (14) d'actionnement dudit second balai, et **en ce que** lesdits moyens de commande sont configurés pour activer seulement ledit premier moteur pour nettoyer la portion (8, 8') de la première zone de la vitre recouvrant le capteur (9).

2. Système (2) selon la revendication précédente, dans lequel ladite portion (8, 8') est située sensiblement au milieu de la vitre (1).

3. Système (2) selon la revendication 1, dans lequel ladite portion est située sur un côté de la vitre.

4. Système (2) selon l'une des revendications précédentes, comprenant en outre des moyens de projection de liquide de nettoyage, lesdits moyens de commande étant configurés pour activer une projection de liquide pour nettoyer ladite portion (8, 8').

5. Système (2) selon la revendication précédente, dans lequel lesdits moyens de projection sont portés par ledit premier balai (15).

6. Système (2) selon la revendication précédente, dans lequel lesdits moyens de projection et/ou lesdits moyens de commande sont configurés pour projeter du liquide depuis un côté seulement dudit premier balai et/ou lors d'une phase de descente dudit premier balai sur la vitre.

7. Procédé d'essuyage d'une vitre (1) d'un véhicule, au moyen d'un système (2) selon l'une des revendications précédentes, comprenant une étape consistant à :
b) activer seulement ledit premier moteur (14) lorsqu'un nettoyage de ladite portion (8, 8') est souhaité, ledit deuxième moteur restant inactif.

8. Procédé selon la revendication précédente, dans lequel il comprend une étape préliminaire consistant à :
a) émettre un signal auxdits moyens de commande en vue de l'activation seule dudit premier moteur (14).

9. Procédé selon la revendication précédente, dans lequel l'émission dudit signal résulte d'une commande effectuée par un conducteur du véhicule, ou par une détection de salissure de ladite portion (8, 8') par ledit capteur (9).

10. Procédé selon l'une des revendications 7 à 9, dans lequel il comprend, pendant l'étape b), une sous-étape consistant à activer une projection de liquide sur la vitre (1).

11. Procédé selon la revendication précédente, dans lequel la projection de liquide a lieu depuis un côté seulement dudit premier balai (15).

12. Procédé selon la revendication précédente, dans lequel la projection de liquide a lieu pendant une phase de descente dudit premier balai (15) sur la vitre (1).

## Patentansprüche

1. System (2) zur Reinigung einer Scheibe (1) eines Fahrzeugs, wobei die Scheibe mit einem Sensor (9) versehen ist, wobei das System umfasst:
- ein erstes Wischblatt (15), das geeignet ist, eine erste Zone der Scheibe zu reinigen, wovon sich ein Abschnitt (8, 8') auf der Höhe des Sensors erstreckt, wobei dieses erste Wischblatt (15) ausgelegt ist, auf der Seite eines Insassen des Fahrzeugs angeordnet zu sein,
- ein zweites Wischblatt (13), das geeignet ist, eine zweite Zone der Scheibe zu reinigen, die von der ersten Zone verschieden ist,
- Mittel (14) zur Betätigung des ersten und zweiten Wischblatts für ihre Bewegung auf der Scheibe, und
- elektronische Mittel (30) zur Steuerung der Betätigungsmittel,
**dadurch gekennzeichnet, dass** die Betätigungsmittel einen ersten Motor (14) zur Betätigung des ersten Wischblatts und einen zweiten Motor (14) zur Betätigung des zweiten Wischblatts umfassen, und dadurch, dass die Steuermittel ausgelegt sind, nur den ersten Motor zu aktivieren, um den Abschnitt (8, 8') der ersten Zone der Scheibe zu reinigen, der den Sensor (9) bedeckt.

2. System (2) nach dem vorhergehenden Anspruch, wobei der Abschnitt (8, 8') im Wesentlichen in der Mitte der Scheibe (1) angeordnet ist.

3. System (2) nach Anspruch 1, wobei der Abschnitt auf einer Seite der Scheibe angeordnet ist.

4. System (2) nach einem der vorhergehenden Ansprüche, außerdem umfassend Mittel zum Sprühen von Reinigungsflüssigkeit, wobei die Steuermittel ausgelegt sind, ein Sprühen der Flüssigkeit zu aktivieren, um den Abschnitt (8, 8') zu reinigen.

5. System (2) nach dem vorhergehenden Anspruch, wobei die Sprühmittel von dem ersten Wischblatt (15) getragen werden.

6. System (2) nach dem vorhergehenden Anspruch, wobei die Sprühmittel und/oder die Steuermittel ausgelegt sind, Flüssigkeit nur von einer Seite des ersten Wischblatts und/oder bei einer Phase des Absenkens des ersten Wischblatts auf die Scheibe zu sprühen.

7. Verfahren zur Reinigung einer Scheibe (1) eines Fahrzeugs mittels eines Systems (2) nach einem der vorhergehenden Ansprüche, umfassend einen Schritt, der besteht aus:
b) dem Aktivieren nur des ersten Motors (14), wenn eine Reinigung des Abschnitts (8, 8') gewünscht wird, wobei der zweite Motor inaktiv bleibt.

8. Verfahren nach dem vorhergehenden Anspruch, wobei dieses einen vorbereitenden Schritt umfasst, der besteht aus:
a) dem Senden eines Signals an die Steuermittel zur Aktivierung nur des ersten Motors (14).

9. Verfahren nach dem vorhergehenden Anspruch, wobei das Senden des Signals aus einem Befehl resultiert, der von einem Lenker des Fahrzeugs gegeben wird, oder aus einer Detektion der Verschmutzung des Abschnitts (8, 8') durch den Sensor (9).

10. Verfahren nach einem der Ansprüche 7 bis 9, wobei dieses während des Schritts b) einen Teilschritt umfasst, der daraus besteht, dass ein Sprühen der Flüssigkeit auf die Scheibe (1) aktiviert wird.

11. Verfahren nach dem vorhergehenden Anspruch, wobei das Sprühen der Flüssigkeit nur von einer Seite des ersten Blatts (15) stattfindet.

12. Verfahren nach dem vorhergehenden Anspruch, wobei das Sprühen der Flüssigkeit während einer Phase des Absenkens des ersten Blatts (15) auf die Scheibe (1) stattfindet.

## Claims

1. System (2) for wiping a vehicle window (1), the said window being equipped with a sensor (9), the system comprising:
- a first wiper (15) which can wipe a first area of the window, including a portion (8, 8') which extends at the level of the said sensor; said first wiper (15) being configured to be situated on the passenger's side of the vehicle,
- a second wiper (13) which can wipe a second area of the window, different from the said first area;
- means (14) for activation of the said first and second wipers for the purpose of their displacement on the window; and
- electronic means (30) for control of the said means for activation,
**characterized in that** the said means for activation comprise a first motor (14) for activation of the said first wiper, and a second motor (14) for activation of the said second wiper, and **in that** the said control means are configured to activate only the said first motor to clean the portion (8, 8') of the first area of the window covering the sensor (9).

2. System (2) according to the preceding claim, wherein the said portion (8, 8') is situated substantially in the middle of the window (1).

3. System (2) according to claim 1, wherein the said portion is situated on one side of the window.

4. System (2) according to one of the preceding claims, additionally comprising means for spraying cleaning liquid, the said control means being configured to activate spraying of liquid to clean the said portion (8, 8').

5. System (2) according to the preceding claim, wherein the said spraying means are supported by the said first wiper (15).

6. System (2) according to the preceding claim, wherein the said spraying means and/or the said control means are configured to spray liquid from one side only of the said first wiper and/or during a phase of descent of the said first wiper on the window.

7. Method for wiping a vehicle window (1) by means of a system (2) according to one of the preceding claims, comprising a step consisting of:
b) activating only the said first motor (14) when cleaning of the said portion (8, 8') is required, the said second motor remaining inactive.

8. Method according to the preceding claim, wherein it comprises a preliminary step consisting of:
a) emitting a signal to the said control means for the purpose of activation only of the said first motor (14).

9. Method according to the preceding claim, wherein the emission of the said signal is derived from a command issued by a driver of the vehicle, or by detection of dirt on the said portion (8, 8') by the said sensor (9).

10. Method according to one of claims 7 to 9, wherein, during the step b), it comprises a sub-step consisting of activating spraying of liquid onto the window (1).

11. Method according to the preceding claim, wherein the spraying of liquid takes place from one side only of the said first wiper (15).

12. Method according to the preceding claim, wherein the spraying of liquid takes place during a phase of descent of the said first wiper (15) on the window (1).
